# EUROPEAN PATENT SPECIFICATION

(11) **EP 4 061 762 B1**
(45) Date of publication and mention of the grant of the patent: **29.01.2025**
(21) Application number: 20811460.3
(22) Date of filing: 20.11.2020
(51) Int. Cl.: B66C 13/56, B62D 55/065, G05G 9/047, B62D 55/06

(54) **TRACKED VEHICLE COMPRISING A USER INTERFACE**
KETTENFAHRZEUG MIT BENUTZERSCHNITTSTELLE
VÉHICULE À CHENILLES COMPRENANT UNE INTERFACE UTILISATEUR

(30) Priority: 22.11.2019 IT 201900021939
(43) Date of publication of application: 28.09.2022
(73) Proprietor: PRINOTH S.p.A., 39049 Vipiteno (BZ) (IT)
(72) Inventor: CASARTELLI, Richard, 39049 Vipiteno (BZ) (IT); KIRCHMAIR, Martin, 39049 Vipiteno (BZ) (IT); PAOLETTI, Alberto, 39049 Vipiteno (BZ) (IT); SALIS, Francesco, 39049 Vipiteno (BZ) (IT)
(74) Representative: Studio Torta S.p.A.
(86) International application number: PCT/IB2020/060970
(87) International publication number: WO 2021/100010

(56) References cited:
- EP-A2- 2 944 727
- EP-A2- 3 264 231
- WO-A1-2017/134636

## Description

### CROSS-REFERENCE TO RELATED APPLICATIONS

This patent application claims priority from Italian patent application no. 102019000021939 filed on November 22, 2019.

### TECHNICAL FIELD

The present invention relates to a tracked vehicle comprising a user interface.

### BACKGROUND OF THE INVENTION

A tracked vehicle, preferably a snow groomer, generally comprising a shovel, a tiller and a winch; and a user interface comprising a joystick coupled to the at least accessory for driving the movements of the at least accessory. Generally, the joystick comprises a base, a lever coupled to the base and a detector assembly for detecting the movement of the lever with respect to a rest position, and a control unit for emitting an output signal based on the movement detected by the detector assembly.

Such tracked vehicle is disclosed in WO 2017/134 636, which discloses the preamble of claim 1.

The interfaces currently in use comprise a joystick having a deadband of value pre-set mechanically or electronically and not modifiable.

A drawback of the prior art is that such joystick can determine an output signal for involuntary movements of the lever of the joystick, consequently it can generate movements of one or more accessories that do not correspond to the will of the operator.

### SUMMARY OF THE INVENTION

The object of the present invention is to provide a tracked vehicle, preferably a snow groomer, that allows overcoming or at least mitigating the drawbacks of the prior art.

Therefore, according to the present invention a tracked vehicle is realised comprising:
a frame extending along a longitudinal axis;
a plurality of tracks;
at least an accessory device selected from a group comprising a blade, a tiller assembly and a winch assembly; and
a user interface comprising a control device coupled to the plurality of tracks for driving the advance of the tracked vehicle; and a joystick coupled to the at least accessory device for driving the movements of the at least accessory device;
wherein the joystick comprises a lever configured so that it can be moved in any direction with respect to a rest position; wherein the joystick comprises a detector assembly for detecting a movement of the lever with respect to the rest position and emitting an output signal based on the detected movement;
the tracked vehicle comprising a control unit coupled to the at least accessory device for controlling at least a movement of said accessory device by means of a control signal sent to the at least accessory device; the control unit being coupled to the detector assembly of the joystick for receiving the output signal and being configured to define the control signal according to a first function and the output signal; and wherein preferably said first function is a non-linear function and preferably the parameters of said first function are adjustable according to further signals; wherein the lever is coupled to a base so that it can be tilted or rotated in any direction with respect to a rest position; the control unit being configured to control at least one of the accessory devices by means of the control signal so that the at least one of the accessory devices does not move if the angular distance between the lever position and the rest position is within a given range of angles of inclination or angles of rotation; the control unit being configured so that the given range of angles of inclination or rotation is dynamically adjustable.

Thanks to the present invention, the first function can be adjusted dynamically by the control unit according to the further signals, preferably relating to other inputs, in this way it is possible to adjust dynamically the sensitivity of the joystick and make it immune or less sensitive to involuntary movements of the operator.

According to a preferred embodiment, the first function is defined so that the control unit emits the control signal equal to zero or does not emit a control signal if the distance between the position of the lever and the rest position is within a given displacement range; wherein the given displacement range is dynamically adjustable; preferably the control signal is obtained by the first function in the following manner: Sc= a*Su+k, where a and k are variable parameters and adjustable by the control unit, k is greater than zero and Su is the output signal.

Thanks to the present invention, the given range is adjusted manually or automatically and this produces the effect of having an adjustable sensitivity, also automatically, such to have a great sensitivity to the voluntary commands of the operator and at the same time to be immune or less sensitive to the involuntary movements of the operator which in turn cause involuntary movements of the accessory devices.

Another object of the present invention is to provide a method for controlling an accessory of a tracked vehicle, in particular of a snow groomer, that reduces the drawbacks of the prior art.

According to the present invention, a method is provided for controlling an accessory of a tracked vehicle, the tracked vehicle comprising: two tracks; at least an accessory device selected from a group comprising a blade, a tiller assembly and a winch assembly; and a user interface comprising a control device coupled to the plurality of tracks for driving the advance of the tracked vehicle, and a joystick coupled to the at least accessory device for driving the movements of the at least accessory device; wherein the joystick comprises a lever configured so that it can be moved in any direction with respect to a rest position; the method comprising the step of detecting a movement of the lever with respect to a rest position, and emitting an output signal according to the detected movement; the method comprising the step of controlling at least a movement of the at least accessory device based on a first function and the output signal, wherein preferably said first function is a non-linear function and preferably the parameters of said first function are adjustable based on further signals; wherein the lever is coupled to a base so that it can be tilted or rotated in any direction with respect to a rest position; the method comprising the step of emitting the control signal if the angular distance between the lever position and the rest position is greater than a given range of angles of inclination and/or rotation; the given range of angles of inclination and/or rotation is adjustable.

### BRIEF DESCRIPTION OF THE DRAWINGS

Further features and advantages of the present invention will become apparent from the following description of non-limiting embodiment examples, with reference to the figures of the accompanying drawings, wherein:
- Figure 1 shows a lateral view of a tracked vehicle in accordance with an embodiment of the present invention;
- Figure 2 shows a perspective view of a joystick of the tracked vehicle of Figure 1;
- Figure 3 shows a top view of the joystick of Figure 2;
- Figure 4 shows a lateral view of the joystick of Figure 2;
- Figure 5 shows a front view of the joystick of Figure 2;
- Figure 6 is a block diagram of a detail of the tracked vehicle 1;
- Figure 7 shows a plurality of functions in accordance with the following invention; and
- Figure 8 shows another plurality of functions in accordance with the following invention.

### DETAILED DESCRIPTION OF THE INVENTION

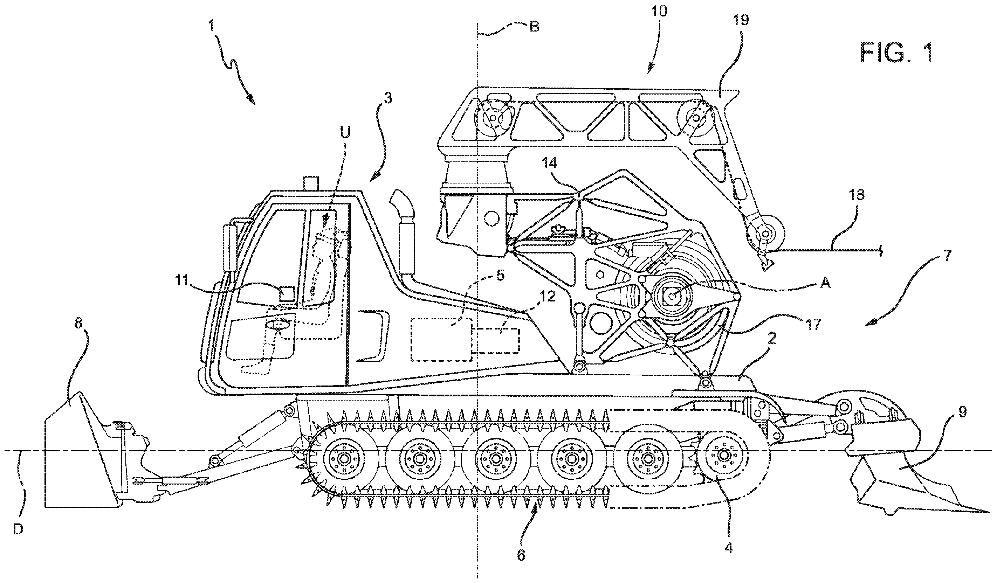

With reference to Figure 1, a tracked vehicle, in particular a snow groomer, according to an embodiment of the present invention is indicated as a whole with reference numeral 1.

The tracked vehicle 1 comprises a frame 2, which extends along a longitudinal axis, a driver's cab 3 and a drive unit 5, for example an internal combustion engine or an electric motor. The driver's cab 3 and the drive unit 5 are housed on the frame 2. The snow groomer 1 is also provided with a pair of tracks 6 and accessory devices 7. The accessory devices 7 comprise a blade 8, supported anteriorly by the frame 2; and a tiller assembly 9, supported posteriorly by the frame 2. The tiller assembly 9 comprises a tiller and a finisher. Furthermore, the tiller assembly 9 can comprise auxiliary tillers (not illustrated in figure) and track setter assemblies (not illustrated in figure) for setting cross-country skiing trails.

Furthermore, the accessory devices 7 comprise a winch assembly 10.

A power transmission 12 is operatively coupled to the drive unit 5, which provides the power necessary for the functioning of the snow groomer 1, and to the accessory devices 7. The power transmission 12 can be hydraulic or electric or a combination between hydraulic and electric.

The accessory devices 7 can also be called accessories.

Furthermore, a tracked vehicle 1 does not necessarily comprise all the accessory devices 7 illustrated above. For example, a tracked vehicle 1 can comprise one or any two of the accessory devices 7 selected from the blade 8, the tiller assembly 9 and the winch assembly 10.

In the driver's cab 3 a user interface 11 is installed, which allows an operator to control the direction of the tracked vehicle 1 and the operation of the accessory devices 7.

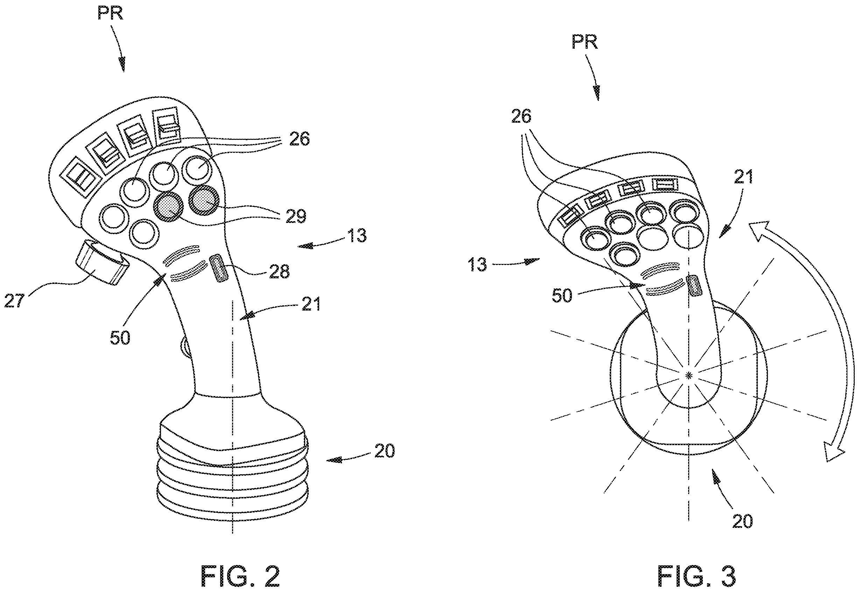

In particular, the user interface 11 comprises a control device and a joystick 13 (Figures 2-5).

The control device is configured to drive the tracks 6. More precisely, the control device is coupled to the plurality of tracks 6 for driving the advance of the tracked vehicle 1.

The joystick 13 is coupled to the accessory devices 7 for driving the movements of the accessory devices 7.

The tracked vehicle 1 is provided with a control system 15.

The control system 15 detects operational parameters of the tracked vehicle 1, such as, for example and not exhaustively, the power supplied by the drive unit 5, the power absorbed by each of the accessory devices 7, the position of the blade 8 and of the tiller assembly 9, the position of the winch assembly 10, the advance speed of the snow groomer 1 and drives the drive unit 5 and/or the tracks 6 and/or the accessory devices 7 based on the commands that it receives from the user interface 11.

The blade 8 can be raised or lowered. Furthermore, the blade 8 can be rotated preferably by means of lateral inclination or roll, in practice creating a difference in level between the right and left ends of the blade 8 with respect to the level of the tracks 6.

Furthermore, the blade 8 can be tilted downward for creating a pitch so as to define an angle of incidence of the blade 8, also called cutting angle.

Furthermore, the blade 8 can be positioned perpendicularly or obliquely with respect to the advance direction of the snow groomer 1, i.e. tilted or moved for defining a yaw.

The joystick 13 of the user interface 11 is configured to control the blade 8. The joystick 13 is housed in the driver's cab 3 and allows driving the described pitch, roll and yaw movements of the blade 8.

The tiller assembly 9 is connected to the frame 2 of the tracked vehicle 1 so that it can be rotated, in practice arranging the blade 8 itself perpendicularly or obliquely with respect to the advance direction of the snow groomer 1 itself, raised or lowered, and moved laterally. Furthermore, it is possible to determine a relative angular position of the tiller assembly 9 for defining a cutting angle of the tiller assembly 9 with respect to the mantle of snow.

The joystick 13 of the user interface 11 is configured to control the tiller assembly 9 and allows driving the described movements of the tiller assembly 9.

The winch assembly 10 comprises a drum 17 about which a cable 18 is wound and an arm 19. The drum 17 rotates about an axis A and is driven by a motor and defines the force of traction of the cable 18. The arm 19 rotates about an axis B and is driven by an actuator for defining the position of the arm 19 so as to direct the cable 18.

The joystick 13 of the user interface 11 is configured to control the winch assembly 10, in particular the force of traction of the cable 18 and the angular position of the arm 19.

With reference to Figures 2 to 5, the joystick 13 comprises a base 20 and a lever 21 coupled to the base 20 so that it can be moved, in particular tilted and/or rotated, in any direction with respect to a rest position PR.

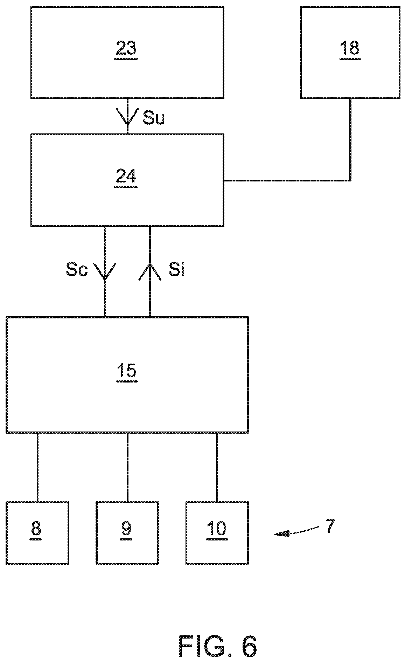

The joystick 13 comprises a detector assembly 23 (Figure 6) configured to detect the movement of the lever 21 with respect to the rest position PR and to emit an output signal Su based on the detected movement.

The tracked vehicle 1 comprises a control unit 24 configured to emit a control signal Sc.

More precisely, the control unit 24 is coupled to the detector assembly 23 for receiving the output signal Su.

Furthermore, the control unit 24 is coupled to the control system 15 for sending the control signal Sc to the control system 15 and for receiving input signals Si from the control system 15.

The control unit 24 is coupled to the accessory devices 7 by means of the control system 15 for controlling the movements of the accessory devices 7 by means of the control signal Sc which is sent to the accessory devices 7.

In a preferred embodiment provided by way of example without thereby losing generality, the control unit 24 is integrated in the control system 15.

In a preferred embodiment provided by way of example without thereby losing generality, the control unit 24 is housed in the joystick 13.

More precisely, the control unit 24 is configured to emit the control signal Sc based on the output signal Su received and based on a function f, wherein the function f is a non-linear function having parameters that are dynamically adjustable.

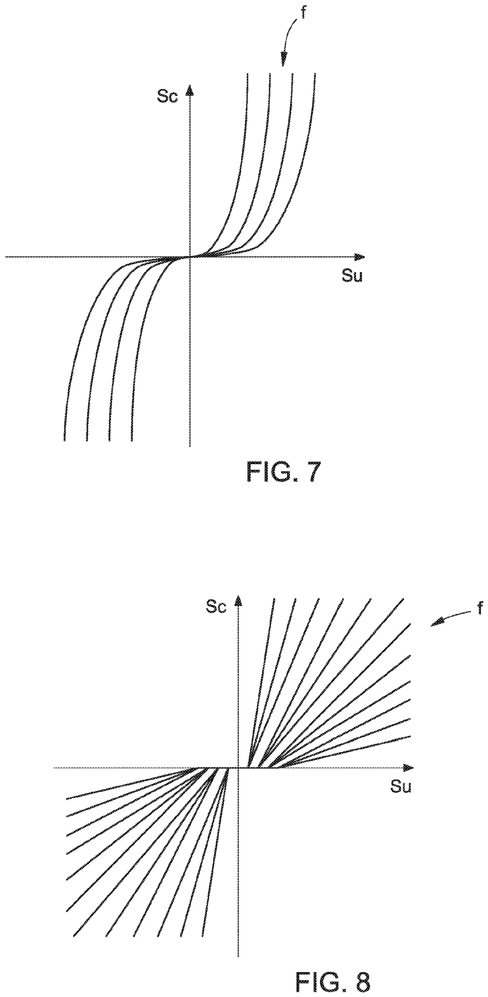

More precisely and with reference to Figure 7 various forms of functions f alternative between each other are provided. The function f in particular can be a proportional, exponential, progressive or regressive function.

In a preferred embodiment, the function f is defined so that the control unit 24 emits the control signal Sc equal to zero or does not emit a control signal Sc if the distance between the position of the lever 13 and the rest position PR is within a given displacement range; wherein the given displacement range is dynamically adjustable. In particular, the given displacement ranges are ranges of angles of inclination and/or angles of rotation.

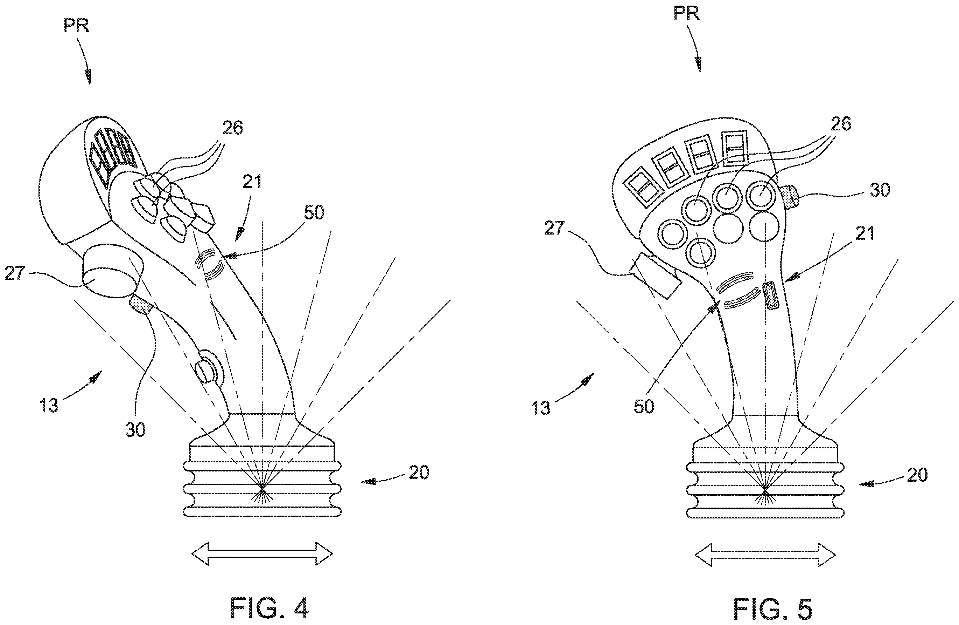

In other words, in this embodiment, the function f is of the type equal to: a*x+k, where x is the variable, and a and k are the parameters, and where k is greater than zero. In other words, the control signal Sc is obtained by the function f in the following manner: Sc= a*Su+k, where a and k are variable parameters and adjustable by the control unit 24, k is greater than zero and Su is the output signal. Consequently, the control unit 24 controls the joystick 13 by means of an adjustable deadband. In fact, varying k in said function, the deadband increases or decreases. This entails that within a given range of movements of the lever 21, the relative accessory device 7 will not move. This range of movements is adjustable manually by the operator by means of a selector or automatically by the control unit 24 based on various parameters of the tracked vehicle 1. More precisely and with reference to Figures 5 and 6, the lever 21 can be tilted in any direction with respect to a rest position PR. The control unit 24 is configured to control at least one of the accessory devices 7, by means of the control system 15, by means of the control signal Sc so that the accessory device 7 does not move if the angular distance between the position of the lever 21 and the rest position PR is within a range of angles of inclination.

Such range of angles of inclination is adjustable manually by the operator by means of a selector or automatically by the control unit 24 based on various parameters of the tracked vehicle 1.

More precisely and with reference to Figure 3, the lever 21 can be rotated in any direction with respect to a rest position PR. The control unit 24 is configured to control at least one of the accessory devices 7, by means of the control system 15, by means of the control signal Sc so that the accessory device 7 does not move if the angular distance between the position of the lever 21 and the rest position PR is less than a given range of angles of rotation. The given range of angle of rotation is adjustable manually by the operator by means of a selector or automatically by the control unit 24 based on various parameters of the tracked vehicle 1.

In a preferred embodiment illustrated by way of example without thereby causing the invention to lose generality, the user interface 11 comprises a selector 18 that can be housed on the lever 21 of the joystick 13 or externally thereof in the dashboard of the tracked vehicle 1 or implemented via software and selectable by means of the user interface for example by means of a control panel of the tracked vehicle or a touch monitor. The selector 18 is coupled to the control unit 24 and is configured to define at least one of the parameters a and/or k of the function f.

In one of the preferred embodiments, wherein the function f is of the type Sc=a*Su+k, the selector 18 is configured to define k and consequently to define one or more of the given ranges between the range of angles of rotation and/or the range of angles of inclination. In this way, one or more of the ranges can be adjusted by the operator manually. Thanks to this manual adjustment, each operator can select one or more ranges as preferred based on the personal style of use of the accessories 7 and the personal preferences, besides, thanks to the manual adjustment it is possible to obviate the wear of the joystick 13 over time.

With reference to Figure 6, the control unit 24 receives the position of the lever 21 from the detector assembly 23 and emits a control signal Sc based on the detected position and based on the function f. The control unit 24 is coupled to the control system 15, which in turn is coupled to the accessory devices 7 and drives them based on the control signal Sc of the control unit 24. In particular, the control signal Sc can be a signal having linear or progressive or regressive features with respect to the detected position of the lever 21.

With reference to Figures 2 to 5, the joystick 13 comprises a plurality of buttons 26 of operation, of mini levers 29, of selector buttons 30 and a potentiometer 27. In an alternative embodiment, not illustrated in the accompanying figure, the joystick comprises a plurality of potentiometers.

In a preferred embodiment, one of the potentiometers adjusts the pulling force of the winch 10 and/or the pressure applied by the tiller assembly 9 on the mantle of snow and/or the speed of rotation of the tiller assembly 9.

In a preferred embodiment of the invention, the selector buttons 30 are used for selecting the type of accessory 7 to be operated and controlled. In another embodiment of the invention the type of accessory 7 is selected and/or controlled acting on one or more of the buttons 26, of the mini levers 29, of the selector buttons 30 and of the potentiometer 27.

The joystick 13 sends signals or data to the control unit 24 based on the buttons 26 of operation, of the mini levers 29, of the selector buttons 30 and of the potentiometer 27 which were operated and the possible value thereof.

In a preferred embodiment of the present invention, the control unit 24 defines the amplitude of one or more of the parameters of the function f, in particular the parameters a and k, based on the buttons pressed by the operator, in particular based on the time that passed from the last time that the operator acted on one among the buttons 26, the mini levers 29, the selector buttons 30 and the potentiometer 27.

In a preferred embodiment, the control unit 24 is configured to vary the type of function f and/or its parameters and, preferably consequently to decrease the amplitude of one or more of the given ranges of angle of rotation or angle of inclination, based on the time passed from the last command received by means of one of the buttons 26, of the mini levers 29, of the buttons 30 or of the potentiometer 27 and subsequently to increase the amplitude of one or more of the given ranges upon the passing of time from the last time that one or more of the buttons 26, of the mini levers 29, of the selector buttons 30 or of the potentiometer 27 was operated.

In a preferred embodiment, but non-limiting of the present invention, the control unit 24 defines the type of function f and its parameters and consequently the amplitude of one or more of the given ranges of angle of rotation, angle of inclination and distance based on the operation of one or more of the selector buttons 30 that indicates which accessory 7 the joystick 13 is driving.

In a non-limiting embodiment, the type of function f and its parameters and consequently one or more of the given ranges of angle of rotation and/or angle of inclination is varied depending on the value selected on the potentiometer 27.

In a preferred embodiment, but non-limiting of the present invention, the control unit 24 defines the type of function f and its parameters, and consequently the amplitude of one or more of the given ranges of angle of rotation and angle of inclination based on the detected speed of movement of the lever 21. In particular the detector assembly 23 sends the positions of the lever 21 both angles of rotation and angles of inclination. The control unit 24 is configured to receive these signals or data relating to the positions and to define the type of function f and its parameters and, consequently, a value of the speed of movement of the lever 21 and to increase the amplitude of one or more of the given ranges of angle of rotation, angle of inclination if the detected speed of movement of the lever 21 is greater than a threshold value.

In a preferred embodiment, but non-limiting of the present invention, the control unit 24 defines the type of function f and its parameters and consequently the amplitude of one or more of the given ranges of angle of rotation, angle of inclination and according to the oscillation frequency and/or amplitude of the lever 21.

In particular the detector assembly 23 sends the positions to the lever 21 both angles of inclination, and angles of rotation.

The control unit 24 is configured to receive these signals or data relating to the positions and to define an oscillation frequency of the lever 21 and to increase the amplitude of one or more of the given ranges of angle of rotation, angle of inclination by means of the variation of the type of function f and of its parameters if the detected oscillation frequency of the lever 21 is within a range of oscillation frequencies.

In a preferred embodiment, but non-limiting of the present invention, the joystick 13 comprises a sensor 28 of proximity for detecting the presence of a hand on the lever 21. The sensor 28 can be a pressure sensor or a capacitive sensor or a magnetic sensor or any other type of sensor capable of detecting a hand on it.

The control unit 24 defines the type of function f and its parameters and consequently the amplitude of one or more of the given ranges of angle of rotation, angle of inclination and based on the presence of a hand on the lever, preferably the control unit 24 decreases the amplitude of one or more of the given ranges when the sensor 28 of presence detects the presence of a hand on the lever 21 of the joystick 13.

In a preferred embodiment, but non-limiting of the present invention, the control unit 24 defines the type of function f and its parameters based on one of the operational parameters of the tracked vehicle 1, such as, for example and not exhaustively, the power supplied by the drive unit 5, the power absorbed by each of the accessory devices 7, the position of the blade 8 and of the tiller assembly 9, the position of the winch assembly 10, the advance speed of the snow groomer 1. Preferably in this way the control unit 24 defines also the amplitude of one or more of the given ranges of angle of rotation, angle of inclination.

In a non-limiting embodiment, the control unit 24 is configured to emit the control signal Sc based on the output signal Su and on the input signal Si, preferably one or more of the parameters of the function f are defined based on the input signal Si.

In a non-limiting embodiment, the control unit 24 is configured to select the function f from a plurality of functions f based on the input signal Si.

In a preferred embodiment, the joystick 13 comprises a light indicator 50 that can be a light, a led or any other element that can be lit on command. Preferably the light indicator 50 is housed on the lever 21. The light indicator 50 is controlled by the control unit 24 and the intensity of the light is adjusted based on the parameters a and k, and on the type of function f. In other words, the intensity of the light is adjusted based on the deadband or the speed of response of the joystick. In another embodiment, the light indicator 50 emits light of different colours and the colour and/or the light intensity of said colour is adjusted based on the parameters a and k, and on the type of function f. In other words, the colour and/or the light intensity is adjusted based on the deadband or on the speed of response of the joystick 13. For example, when the deadband is greater than a given range the joystick 13 can emit a red light while when the deadband is less than a given range the joystick 13 can emit a green light. Furthermore, the light indicator 50 is configured to indicate errors in the joystick 13 and/or malfunctioning. In particular, the light indicator 50 is configured to indicate a state of block of the joystick 13.

Thanks to the present invention, the joystick 13 has a deadband within which it does not emit a control signal Sc for the accessories 7. Such deadband defined by the given ranges of angle of rotation and/or angle of inclination can be adjusted manually or automatically and this allows having a variable deadband based on the conditions of functioning of the tracked vehicle 1 so that it is reduced to the minimum when the operator is actually controlling one of the accessory devices 7 and it is instead increased when the operator is not controlling one of the accessory devices 7, so as to avoid as much as possible involuntary movements of the accessory devices 7 caused by accidental strikes on the lever 21 of the joystick 13 or by vibrations of the tracked vehicle 1 or by wear of the joystick 13 or by other causes. Thanks to the present invention, the sensitivity of the joystick 13 is adjusted and this allows having both an excellent sensitivity, when necessary, and an immunity to the involuntary movements.

## Claims

1. Tracked vehicle comprising:
a frame (2) extending along a longitudinal axis;
a plurality of tracks (6);
at least an accessory device (7) selected from a group comprising a blade (8), a tiller assembly (9) and a winch assembly (10); and
a user interface (11) comprising a control device coupled to the plurality of tracks (6) to drive the advance of the tracked vehicle (1); and a joystick (13) coupled to the at least accessory device (7) to control the movements of the at least accessory device (7);
wherein the joystick (13) includes a lever (21) configured so that it can be moved, preferably tilted and/or rotated, in any direction with respect to a rest position (PR) ;
the tracked vehicle being **characterized in that** the joystick (13) comprises a detector assembly (23) configured to detect a movement of the lever (21) with respect to the rest position (PR) and to emit an output signal (Su) based on the detected movement;
the tracked vehicle (1) comprising a control unit (24) coupled to the at least accessory device (7) to control at least a movement of said accessory device (7) by means of a control signal (Sc) sent to the at least accessory device (7); the control unit (24) being coupled to the detector assembly (23) of the joystick (13) to receive the output signal (Su), and being configured to output the control signal (Sc) according to a first function (f) and the output signal (Su); and wherein preferably said first function (f) is a non-linear function, and preferably the parameters of said first function are adjustable according to further signals; wherein the lever (21) is coupled to a base (20) so that it can be tilted or rotated in any direction with respect to a rest position (PR); the control unit (24) being configured to control at least one of the accessory devices (7) by means of the control signal (Sc) so that the at least one of the accessory devices (7) does not move if the angular distance between the lever position (21) and the rest position (PR) is within a given range of angles of inclination or angles of rotation; the control unit (24) being configured so that the given range of angles of inclination or rotation is dynamically adjustable.

2. Tracked vehicle of Claim 1, wherein the first function (f) is defined so that the control unit (24) outputs the control signal (Sc) equal to zero or does not output the control signal (Sc) if the distance between the position of the lever (13) and the rest position (PR) is within a given displacement range; wherein the given displacement range is dynamically adjustable; preferably the control signal (Sc) is obtained by the first function (f) in the following manner: Sc= a*Su+k, where a and k are variable parameters and adjustable by the control unit (24), k is greater than zero and Su is the output signal.

3. Tracked vehicle of any of the above claims, comprising a selector (18) and wherein one or more of the parameters of the first function (f) is adjustable via the selector (18) by an operator.

4. Tracked vehicle of any of the above claims, wherein the control signal (Sc) is a signal having progressive or regressive characteristics with respect to the detected distance from the rest position (PR).

5. Tracked vehicle of any of the above claims, wherein at least one of the parameters of the first function (f) is defined by the control unit (24) based on a detected speed of movement of the lever (21); in particular the control unit (24) is configured to increase the amplitude of the given range if the detected speed of movement of the lever (21) is greater than a threshold value.

6. Tracked vehicle of any of the above claims, wherein at least one of the parameters of the first function (f) is defined by the control unit (24) according to an oscillation frequency of the lever (21), in particular the control unit (24) is configured to increase the amplitude of the at least one of the given ranges if the detected oscillation frequency of the lever (21) is within a range of oscillation frequencies.

7. Tracked vehicle of any of the previous claims, wherein the joystick (13) comprises a plurality of buttons (26, 30) or mini levers (29), wherein at least one of the parameters of the first function (f) is defined by the control unit (24) based on an activation of one of the buttons (26, 30) and/or one of the mini levers (29) of the joystick (13).

8. Tracked vehicle of any of the previous claims, wherein the joystick (13) is configured to detect the presence of a hand on the lever (21); wherein at least one of the parameters of the first function (f) is defined by the control unit (24) based on the detection of the presence of a hand on the lever (21).

9. Tracked vehicle of any of the previous claims, wherein the joystick (13) comprises an accessory selector (27) to select the type of accessory (7) to be operated; wherein at least one of the given ranges or at least one of the given parameters of the function (f) is defined by the control unit (24) according to the value of the accessory selector (27) that indicates which accessory device (7) is controlled by the joystick (13); preferably the given range is selected from a group of given ranges based on the value selected by the accessory selector (27).

10. Tracked vehicle of any of the previous claims, wherein the joystick (13) comprises a light indicator (50) preferably located on the lever (21), wherein the intensity and/or colour of the light indicator is adjusted according to the parameters and/or type of function of the first function (f).

11. Method to control an accessory of a tracked vehicle, the tracked vehicle (1) comprising: two tracks; at least an accessory device (7) selected from a group comprising a blade (8), a tiller assembly (9) and a winch assembly (10); and a user interface (11) comprising a control device coupled to the plurality of tracks (6) to control the advance of the tracked vehicle (1), and a joystick (13) coupled to the at least accessory device (7) to control the movements of the at least accessory device (7); wherein the joystick (13) comprises a lever (21) configured so that it can be moved in any direction with respect to a rest position (PR); the method comprising the step of detecting a movement of the lever (21) with respect to a rest position (PR), and emitting an output signal (Su) based on the movement detected; the method comprising the step of controlling at least a movement of the at least accessory device (7) based on a first function (f) and the output signal (Su), and wherein preferably said first function is a non-linear function and wherein preferably the parameters of said first function (f) are adjustable based on further signals; wherein the lever (21) is coupled to a base (20) so that it can be tilted or rotated in any direction with respect to a rest position (PR); the method comprising the step of emitting the control signal (Sc) if the angular distance between the lever position (21) and the rest position (PR) is greater than a given range of angles of inclination and/or rotation; the given range of angles of inclination and/or rotation is adjustable.

12. Method according to Claim 11, wherein the method comprises the step of emitting a control signal (Sc) configured to move at least one of the accessory devices (7) if the distance between the lever position (13) and the rest position (PR) is greater than one or more given ranges; wherein the given range is dynamically adjustable.

13. Method according to Claim 11 or 12, wherein the joystick (13) comprises a number of buttons (26, 30), mini levers (29) and an accessory selector (27) to select and/or drive the type of accessory (7) to be operated; the method comprises the step of defining at least one of the given ranges or at least one parameter of the first function (f) based on one of the parameters selected from a parameter group comprising: detected speed of movement of the lever (21); oscillation frequency of the lever (21); activation of one of the buttons (26) of the joystick (13); detection of a hand on the lever (21); value of the accessory selector (27) that indicates which accessory the joystick is controlling; value of a selector (18) regulator.

## Patentansprüche

1. Kettenfahrzeug, umfassend:
einen Rahmen (2), der sich entlang einer Längsachse erstreckt;
eine Mehrzahl von Ketten (6);
zumindest eine Zubehörvorrichtung (7), die aus einer Gruppe umfassend eine Klinge (8), eine Fräsenanordnung (9) und eine Windenanordnung (10) ausgewählt ist; und
eine Benutzerschnittstelle (11), die eine Steuer- bzw. Regelvorrichtung, die mit der Mehrzahl von Ketten (6) gekoppelt ist, um den Vortrieb des Kettenfahrzeugs (1) anzutreiben; und einen Joystick (13) umfasst, der mit der zumindest einen Zubehörvorrichtung (7) gekoppelt ist, um die Bewegungen der zumindest einen Zubehörvorrichtung (7) zu steuern bzw. zu regeln;
wobei der Joystick (13) einen Hebel (21) enthält, der so konfiguriert ist, dass er in jede Richtung in Bezug auf eine Ruheposition (PR) bewegt, vorzugsweise gekippt und/oder gedreht werden kann;
wobei das Kettenfahrzeug **dadurch gekennzeichnet ist, dass** der Joystick (13) eine Detektoranordnung (23) umfasst, die konfiguriert ist, eine Bewegung des Hebels (21) in Bezug auf die Ruheposition (PR) zu detektieren und basierend auf der detektierten Bewegung ein Ausgangssignal (Su) zu emittieren;
wobei das Kettenfahrzeug (1) eine Steuer- bzw. Regeleinheit (24) umfasst, die mit der zumindest einen Zubehörvorrichtung (7) gekoppelt ist, um zumindest eine Bewegung der Zubehörvorrichtung (7) mittels eines Steuer- bzw. Regelsignals (Sc) zu steuern bzw. zu regeln, das an die zumindest eine Zubehörvorrichtung (7) gesendet wird; wobei die Steuer- bzw. Regeleinheit (24) mit der Detektoranordnung (23) des Joysticks (13) gekoppelt ist, um das Ausgangssignal (Su) zu empfangen, und konfiguriert ist, das Steuer- bzw. Regelsignal (Sc) gemäß einer ersten Funktion (f) und dem Ausgangssignal (Su) auszugeben; und wobei vorzugsweise die erste Funktion (f) eine nichtlineare Funktion ist und vorzugsweise die Parameter der ersten Funktion gemäß weiteren Signalen einstellbar sind; wobei der Hebel (21) mit einer Basis (20) gekoppelt ist, so dass er in jede Richtung in Bezug auf eine Ruheposition (PR) gekippt oder gedreht werden kann; wobei die Steuer- bzw. Regeleinheit (24) konfiguriert ist, zumindest eine der Zubehörvorrichtungen (7) mittels des Steuer- bzw. Regelsignals (Sc) so zu steuern bzw. zu regeln, dass sich die zumindest eine der Zubehörvorrichtungen (7) nicht bewegt, wenn der Winkelabstand zwischen der Hebelposition (21) und der Ruheposition (PR) innerhalb eines vorgegebenen Bereichs von Neigungswinkeln oder Drehwinkeln liegt; wobei die Steuer- bzw. Regeleinheit (24) so konfiguriert ist, dass der vorgegebene Bereich von Neigungswinkeln oder Drehwinkeln dynamisch einstellbar ist.

2. Kettenfahrzeug nach Anspruch 1, wobei die erste Funktion (f) so definiert ist, dass die Steuer- bzw. Regeleinheit (24) das Steuer- bzw. Regelsignal (Sc) gleich Null ausgibt oder das Steuer- bzw. Regelsignal (Sc) nicht ausgibt, wenn der Abstand zwischen der Position des Hebels (13) und der Ruheposition (PR) innerhalb eines vorgegebenen Verschiebungsbereichs liegt; wobei der vorgegebene Verschiebungsbereich dynamisch einstellbar ist; wobei vorzugsweise das Steuer- bzw. Regelsignal (Sc) durch die erste Funktion (f) auf folgende Weise erhalten wird: Sc= a*Su+k, wobei a und k variable Parameter sind und durch die Steuer- bzw. Regeleinheit (24) einstellbar sind, k größer als Null ist und Su das Ausgangssignal ist.

3. Kettenfahrzeug nach einem der obigen Ansprüche, umfassend einen Selektor (18), und wobei einer oder mehrere der Parameter der ersten Funktion (f) über den Selektor (18) durch eine Bedienperson einstellbar sind.

4. Kettenfahrzeug nach einem der obigen Ansprüche, wobei das Steuer- bzw. Regelsignal (Sc) ein Signal mit progressiven oder regressiven Eigenschaften in Bezug auf den detektierten Abstand von der Ruheposition (PR) ist.

5. Kettenfahrzeug nach einem der obigen Ansprüche, wobei zumindest einer der Parameter der ersten Funktion (f) durch die Steuer- bzw. Regeleinheit (24) basierend auf einer detektierten Bewegungsgeschwindigkeit des Hebels (21) definiert wird; wobei insbesondere die Steuer- bzw. Regeleinheit (24) konfiguriert ist, die Amplitude des vorgegebenen Bereichs zu erhöhen, wenn die detektierte Bewegungsgeschwindigkeit des Hebels (21) größer als ein Schwellenwert ist.

6. Kettenfahrzeug nach einem der obigen Ansprüche, wobei zumindest einer der Parameter der ersten Funktion (f) durch die Steuer- bzw. Regeleinheit (24) gemäß einer Schwingungsfrequenz des Hebels (21) definiert wird, wobei insbesondere die Steuer- bzw. Regeleinheit (24) konfiguriert ist, die Amplitude des zumindest einen der vorgegebenen Bereiche zu erhöhen, wenn die detektierte Schwingungsfrequenz des Hebels (21) innerhalb eines Schwingungsfrequenzbereichs liegt.

7. Kettenfahrzeug nach einem der vorhergehenden Ansprüche, wobei der Joystick (13) eine Mehrzahl von Knöpfen bzw. Tasten (26, 30) oder Minihebeln (29) umfasst, wobei zumindest einer der Parameter der ersten Funktion (f) durch die Steuer- bzw. Regeleinheit (24) basierend auf einer Aktivierung einer der Tasten (26, 30) und/oder eines der Minihebel (29) des Joysticks (13) definiert wird.

8. Kettenfahrzeug nach einem der vorhergehenden Ansprüche, wobei der Joystick (13) konfiguriert ist, die Anwesenheit einer Hand auf dem Hebel (21) zu detektieren; wobei zumindest einer der Parameter der ersten Funktion (f) durch die Steuer- bzw. Regeleinheit (24) basierend auf der Detektion der Anwesenheit einer Hand auf dem Hebel (21) definiert wird.

9. Kettenfahrzeug nach einem der vorhergehenden Ansprüche, wobei der Joystick (13) einen Zubehörselektor (27) zum Auswählen des Typs des zu bedienenden Zubehörs (7) umfasst; wobei zumindest einer der vorgegebenen Bereiche oder zumindest einer der vorgegebenen Parameter der Funktion (f) durch die Steuer- bzw. Regeleinheit (24) gemäß dem Wert des Zubehörselektors (27) definiert wird, der angibt, welche Zubehörvorrichtung (7) von dem Joystick (13) gesteuert bzw. geregelt wird; wobei vorzugsweise der vorgegebene Bereich aus einer Gruppe vorgegebener Bereiche basierend auf dem von dem Zubehörselektor (27) ausgewählten Wert ausgewählt wird.

10. Kettenfahrzeug nach einem der vorhergehenden Ansprüche, wobei der Joystick (13) einen Lichtindikator (50) umfasst, der sich vorzugsweise an dem Hebel (21) befindet, wobei die Intensität und/oder Farbe des Lichtindikators gemäß den Parametern und/oder dem Funktionstyp der ersten Funktion (f) eingestellt wird.

11. Verfahren zum Steuern bzw. Regeln eines Zubehörs eines Kettenfahrzeugs, wobei das Kettenfahrzeug (1) umfasst: zwei Ketten; zumindest eine Zubehörvorrichtung (7), die aus einer Gruppe umfassend eine Klinge (8), eine Fräsenanordnung (9) und eine Windenanordnung (10) ausgewählt ist; und eine Benutzerschnittstelle (11), die eine Steuer- bzw. Regelvorrichtung, die mit der Mehrzahl von Ketten (6) gekoppelt ist, um den Vortrieb des Kettenfahrzeugs (1) zu steuern bzw. zu regeln, und einen Joystick (13) umfasst, der mit der zumindest einen Zubehörvorrichtung (7) gekoppelt ist, um die Bewegungen der zumindest einen Zubehörvorrichtung (7) zu steuern bzw. zu regeln; wobei der Joystick (13) einen Hebel (21) umfasst, der so konfiguriert ist, dass er in jede Richtung in Bezug auf eine Ruheposition (PR) bewegt werden kann; wobei das Verfahren den Schritt des Detektierens einer Bewegung des Hebels (21) in Bezug auf eine Ruheposition (PR) und des Emittierens eines Ausgangssignals (Su) basierend auf der detektierten Bewegung umfasst; wobei das Verfahren den Schritt des Steuerns bzw. Regelns von zumindest einer Bewegung der zumindest einen Zubehörvorrichtung (7) basierend auf einer ersten Funktion (f) und dem Ausgangssignal (Su) umfasst, und wobei vorzugsweise die erste Funktion eine nichtlineare Funktion ist und wobei vorzugsweise die Parameter der ersten Funktion (f) basierend auf weiteren Signalen einstellbar sind; wobei der Hebel (21) mit einer Basis (20) gekoppelt ist, so dass er in jede Richtung in Bezug auf eine Ruheposition (PR) gekippt oder gedreht werden kann; wobei das Verfahren den Schritt des Emittierens des Steuer- bzw. Regelsignals (Sc) umfasst, wenn der Winkelabstand zwischen der Hebelposition (21) und der Ruheposition (PR) größer als ein vorgegebener Bereich von Neigungs- und/oder Drehwinkeln ist; wobei der vorgegebene Bereich von Neigungs- und/oder Drehwinkeln einstellbar ist.

12. Verfahren nach Anspruch 11, wobei das Verfahren den Schritt des Emittierens eines Steuer- bzw. Regelsignals (Sc) umfasst, das konfiguriert ist, zumindest eine der Zubehörvorrichtungen (7) zu bewegen, wenn der Abstand zwischen der Hebelposition (13) und der Ruheposition (PR) größer als ein oder mehrere vorgegebene Bereiche ist; wobei der vorgegebene Bereich dynamisch einstellbar ist.

13. Verfahren nach Anspruch 11 oder 12, wobei der Joystick (13) eine Anzahl von Knöpfen bzw. Tasten (26, 30), Minihebeln (29) und einen Zubehörselektor (27) zum Auswählen und/oder Antreiben des Typs des zu bedienenden Zubehörs (7) umfasst; wobei das Verfahren den Schritt des Definierens von zumindest einem der vorgegebenen Bereiche oder von zumindest einem Parameter der ersten Funktion (f) basierend auf einem der Parameter umfasst, der aus einer Parametergruppe ausgewählt wird, die umfasst: detektierte Bewegungsgeschwindigkeit des Hebels (21); Schwingungsfrequenz des Hebels (21); Aktivierung einer der Tasten (26) des Joysticks (13); Detektion einer Hand auf dem Hebel (21); Wert des Zubehörselektors (27), der angibt, welches Zubehör der Joystick steuert bzw. regelt; Wert eines Reglers eines Selektors (18).

## Revendications

1. Véhicule à chenilles comprenant :
un châssis (2) s'étendant le long d'un axe longitudinal ;
une pluralité de chenilles (6) ;
au moins un dispositif accessoire (7) sélectionné dans un groupe comprenant une pale (8), un ensemble de fraise (9) et un ensemble de treuil (10) ; et
une interface utilisateur (11) comprenant un dispositif de commande couplé à la pluralité de chenilles (6) pour piloter l'avancement du véhicule à chenilles (1) ; et un levier de commande (13) couplé au au moins un dispositif accessoire (7) pour commander les mouvements du au moins un dispositif accessoire (7) ;
dans lequel le levier de commande (13) comprend un levier (21) configuré de sorte qu'il peut être déplacé, de préférence incliné et/ou entraîné en rotation, dans n'importe quelle direction par rapport à une position de repos (PR) ;
le véhicule à chenilles étant **caractérisé en ce que** le levier de commande (13) comprend un ensemble de détecteur (23) configuré pour détecter un mouvement du levier (21) par rapport à la position de repos (PR) et pour émettre un signal de sortie (Su) sur la base du mouvement détecté ;
le véhicule à chenilles (1) comprenant une unité de contrôle (24) couplée au au moins un dispositif accessoire (7) pour contrôler au moins un mouvement dudit dispositif accessoire (7) au moyen d'un signal de contrôle (Sc) envoyé au au moins un dispositif accessoire (7) ; l'unité de contrôle (24) étant couplée à l'ensemble de détecteur (23) du levier de commande (13) pour recevoir le signal de sortie (Su), et étant configurée pour émettre le signal de contrôle (Sc) selon une première fonction (f) et le signal de sortie (Su) ; et dans lequel de préférence ladite première fonction (f) est une fonction non linéaire, et de préférence les paramètres de ladite première fonction sont réglables selon d'autres signaux ; dans lequel le levier (21) est couplé à une base (20) de sorte qu'il peut être incliné ou entraîné en rotation dans n'importe quelle direction par rapport à une direction de repos (PR) ; l'unité de contrôle (24) étant configurée pour contrôler au moins l'un des dispositifs accessoires (7) au moyen du signal de contrôle (Sc) de sorte que le au moins un des dispositifs accessoires (7) ne se déplace pas si la distance angulaire entre la position de levier (21) et la position de repos (PR) est dans une plage donnée d'angles d'inclinaison ou d'angles de rotation ; l'unité de contrôle (24) étant configurée de sorte que la plage donnée d'angles d'inclinaison ou de rotation est dynamiquement réglable.

2. Véhicule à chenilles selon la revendication 1, dans lequel la première fonction (f) est définie de sorte que l'unité de contrôle (24) émet le signal de contrôle (Sc) égal à zéro ou n'émet pas le signal de contrôle (Sc) si la distance entre la position du levier (13) et la position de repos (PR) est dans une plage de déplacement donnée ; dans lequel la plage de déplacement donnée est réglable de manière dynamique ; de préférence le signal de contrôle (Sc) est obtenu par la première fonction (f) de la manière suivante : Sc = a * Su + k, où a et k sont des paramètres variables et réglables par l'unité de contrôle (24), k est supérieur à zéro et Su est le signal de sortie.

3. Véhicule à chenilles selon l'une quelconque des revendications ci-dessus, comprenant un sélecteur (18) et dans lequel un ou plusieurs des paramètres de la première fonction (f) sont réglables via le sélecteur (18) par un opérateur.

4. Véhicule à chenilles selon l'une quelconque des revendications ci-dessus, dans lequel le signal de contrôle (Sc) est un signal ayant des caractéristiques progressives ou régressives par rapport à la distance détectée à partir de la position de repos (PR).

5. Véhicule à chenilles selon l'une quelconque des revendications ci-dessus, dans lequel au moins l'un des paramètres de la première fonction (f) est défini par l'unité de contrôle (24) sur la base d'une vitesse de mouvement détectée du levier (21) ; en particulier l'unité de contrôle (24) est configurée pour augmenter l'amplitude de la plage donnée si la vitesse de mouvement détectée du levier (21) est supérieure à une valeur de seuil.

6. Véhicule à chenilles selon l'une quelconque des revendications ci-dessus, dans lequel au moins l'un des paramètres de la première fonction (f) est défini par l'unité de contrôle (24) selon une fréquence d'oscillation du levier (21), en particulier l'unité de contrôle (24) est configurée pour augmenter l'amplitude de la au moins une des plages données si la fréquence d'oscillation détectée du levier (21) est dans une plage de fréquences d'oscillation.

7. Véhicule à chenilles selon l'une quelconque des revendications précédentes, dans lequel le levier de commande (13) comprend une pluralité de boutons (26, 30) ou de mini leviers (29), dans lequel au moins l'un des paramètres de la première fonction (f) est défini par l'unité de contrôle (24) sur la base d'une activation de l'un des boutons (26, 30) et/ou l'un des mini leviers (29) du levier de commande (13).

8. Véhicule à chenilles selon l'une quelconque des revendications précédentes, dans lequel le levier de commande (13) est configuré pour détecter la présence d'une main sur le levier (21) ; dans lequel au moins l'un des paramètres de la première fonction (f) est défini par l'unité de commande (24) sur la base de la détection de la présence d'une main sur le levier (21).

9. Véhicule à chenilles selon l'une quelconque des revendications précédentes, dans lequel le levier de commande (13) comprend un sélecteur d'accessoire (27) pour sélectionner le type d'accessoire (7) à actionner ; dans lequel au moins l'une des plages données ou au moins l'un des paramètres donnés de la fonction (f) est défini(e) par l'unité de contrôle (24) selon la valeur du sélecteur d'accessoire (27) qui indique quel dispositif d'accessoire (7) est contrôlé par le levier de commande (13) ; de préférence la plage donnée est sélectionnée dans un groupe de plages données sur la base de la valeur sélectionnée par le sélecteur d'accessoire (27).

10. Véhicule à chenilles selon l'une quelconque des revendications précédentes, dans lequel le levier de commande (13) comprend un indicateur lumineux (50) de préférence positionné sur le levier (21), dans lequel l'intensité et/ou la couleur de l'indicateur lumineux est (sont) réglée(s) selon les paramètres et/ou le type de fonction de la première fonction (f).

11. Procédé pour contrôler un accessoire d'un véhicule à chenilles, le véhicule à chenilles (1) comprenant : deux chenilles ; au moins un dispositif accessoire (7) sélectionné dans un groupe comprenant une lame (8), un ensemble de fraise (9) et un ensemble de treuil (10) ; et une interface utilisateur (11) comprenant un dispositif de commande couplé à la pluralité de chenilles (6) pour commander l'avancement du véhicule à chenilles (1) et un levier de commande (13) couplé au au moins un dispositif accessoire (7) pour commander les mouvements du au moins un dispositif accessoire (7) ; dans lequel le levier de commande (13) comprend un levier (21) configuré de sorte qu'il peut être déplacé dans n'importe quelle direction par rapport à une position de repos (PR) ; le procédé comprenant l'étape de détection d'un mouvement du levier (21) par rapport à une position de repos (PR), et l'émission d'un signal de sortie (Su) sur la base du mouvement détecté ; le procédé comprenant l'étape de contrôle d'au moins un mouvement du au moins un dispositif accessoire (7) sur la base d'une première fonction (f) et du signal de sortie (Su), et dans lequel de préférence ladite première fonction est une fonction non linéaire et dans lequel de préférence les paramètres de ladite première fonction (f) sont réglables sur la base d'autres signaux ; dans lequel le levier (21) est couplé à une base (20) de sorte qu'il peut être incliné ou entraîné en rotation dans n'importe quelle direction par rapport à une position de repos (PR) ; le procédé comprenant l'étape d'émission du signal de contrôle (Sc) si la distance angulaire entre la position de levier (21) et la position de repos (PR) est supérieure à une plage donnée d'angles d'inclinaison et/ou de rotation ; la plage donnée d'angles d'inclinaison et/ou de rotation est réglable.

12. Procédé selon la revendication 11, dans lequel le procédé comprend l'étape d'émission d'un signal de contrôle (Sc) configuré pour déplacer au moins l'un des dispositifs accessoires (7), si la distance entre la position de levier (13) et la position de repos (PR) est supérieure à une ou plusieurs plages données ; dans lequel la plage donnée est réglable de manière dynamique.

13. Procédé selon la revendication 11 ou 12, dans lequel le levier de commande (13) comprend un certain nombre de boutons (26, 30), des mini leviers (29) et un sélecteur d'accessoire (27) pour sélectionner et/ou piloter le type d'accessoire (7) à actionner ; le procédé comprend l'étape de définition d'au moins l'une des plages données ou d'au moins un paramètre de la première fonction (f) sur la base de l'un des paramètres sélectionnés dans un groupe de paramètres comprenant : la vitesse de mouvement détectée du levier (21) ; la fréquence d'oscillation du levier (21) ; l'activation de l'un des boutons (26) du levier de commande (13) ; la détection d'une main sur le levier (21) ; la valeur du sélecteur d'accessoire (27) qui indique quel accessoire commande le levier de commande; la valeur d'un régulateur de sélecteur (18).
